# EUROPEAN PATENT APPLICATION

(11) **EP 1 813 970 A1**
(43) Date of publication of application: **01.08.2007**
(21) Application number: 05806954.3
(22) Date of filing: 17.11.2005
(51) Int. Cl.: G02B 5/08

(54) **LIGHT REFLECTOR AND PROCESS FOR PRODUCING THE SAME**

(30) Priority: 19.11.2004 JP 2004336785; 19.11.2004 JP 2004336773
(71) Applicant: MITSUBISHI PLASTICS, INC., Chiyoda-ku, Tokyo 100-0005 (JP)
(72) Inventor: SAKATA, Nobuhiro, Mitsubishi Plastics, Inc., Nagahama-shi, Shiga 526-8660 (JP); KANAYAMA, Masahiro, Matsue-shi Shimane 690-0824 (JP); SASAOKA, Yasushi, Mitsubishi Plastics, Inc., Nagahama-shi, Shiga 526-8660 (JP)
(74) Representative: Gille Hrabal Struck Neidlein Prop Roos
(86) International application number: PCT/JP2005/021100
(87) International publication number: WO 2006/054626

(57) **Abstract**

A light-reflecting panel is proposed, provided with a constitution wherein a fine powder-containing polyester layer comprising an aliphatic polyester series resin and a fine powder filler is layered over one face or both faces of a metal plate, as a light-reflecting material, which is thin and allows for form-processing, provided with a high degree of reflection capability while at the same time preventing a decrease in reflectance due to ultraviolet irradiation. This light-reflecting material allows excellent light reflectivity to be obtained by refractive scatter due to a difference in the refractive indices of the aliphatic polyester series resin and the fine powder filler constituting the fine powder-containing polyester layer, is **characterized by** almost no decrease in reflectance due to ultraviolet irradiation occurs since the aliphatic polyester series resin constituting the fine powder-containing polyester layer does not have aromatic rings that absorb ultraviolet light, and can be made into a thin type light-reflecting panel since it can be layered directly onto a metal plate without using an adhesive.

## Description

### [Technical field]

The present invention relates to a light-reflecting material and manufacturing method thereof; in particular, it relates to a light-reflecting material used as a reflector for an illumination device in a liquid crystal display device and manufacturing method thereof.

### [Background art]

For an illumination device used in a liquid crystal display device, the direct underlying method, which projects the light from a light source directly onto a liquid crystal display panel, and the side light method (also called the edge light method), which projects the light from a light source onto a liquid crystal display panel via a light-guide panel comprising an acrylic resin or the like, exist.

In liquid crystal display devices for applications requiring them to be of the thin type, such as monitors, small liquid crystal televisions and notebook-type personal computers, the side light method is adopted among the above-mentioned illumination devices, and a member called reflector, comprising a form-processed light-reflecting material in which a metal and a reflective film are layered, is used in order to transmit efficiently the light from a light source to the light-guide panel.

Polyethylene terephthalate film with vapor-deposited silver (hereinafter, silver-deposited PET film), white polyester films having reflection capability, and the like, are used as reflective film for use in light-reflecting materials, which uses are separated taking into consideration the cost, the thickness required from the light-reflecting material, and the like.

For instance, among the liquid crystal display devices using the side light method, those applications requiring to be of particularly thin type, as in a notebook-type personal computer, there is also the necessity of thinning the thickness of the light-reflecting material as much as possible, such that a light-reflecting material with a silver-deposited PET film layered onto a metal plate is used, although it is comparatively expensive.
Meanwhile, in applications in which thickness is allowed to some extent, such as in monitors and liquid crystal televisions, a light-reflecting material with a white polyester film layered onto a metal plate is used, which is less costly than, and has approximately an equivalent reflection capability to, a silver-deposited PET film.

For instance, a reflective film, which is a white sheet formed by adding titanium oxide to an aromatic polyester series resin, is disclosed in Patent Reference 1, as a reflective film used in above mentioned application.
However, as aromatic rings contained in the molecular chain of the aromatic polyester series resin forming the film absorb ultraviolet light, this film has the disadvantage that, due to the ultraviolet light emitted from the light source of the liquid crystal display device and the like, the film deteriorates and becomes yellow, such that light reflectivity of the reflective film decreases.
When form-processing a light-reflecting material as for a reflector, a light-reflecting material with a reflective film attached to a metal plate is used. Since shape-holding ability is required to hold a shape when folded during the form-processing a light-reflecting material, for instance, a reflective material is disclosed in Patent Reference 2, in which an adhesive layer is applied onto a metal and a polyester reflective film is further layered on top thereof.

[Patent Reference 1] Japanese Patent Application Laid-Open No. 2002-138150
[Patent Reference 2] Japanese Patent Application Laid-Open No. H10-177805

### [Disclosure of the invention]

### [Problems to be solved by the invention]

The purpose of the present invention provides a light-reflecting material allowing excellent reflectivity to be obtained, and furthermore, allowing for a suppression of a decrease in reflectance over time due to ultraviolet light absorption.

The present invention proposes a light-reflecting panel comprising a constitution in which a fine powder-containing polyester layer (A layer) containing an aliphatic polyester series resin and a fine powder filler is provided on one face or on both faces of a metal plate.

The light-reflecting material of the present invention allows an excellent light reflectivity to be obtained by the refractive scatter due to the difference in the refractive indices of the aliphatic polyester series resin and the fine powder filler contained in the fine powder-containing polyester layer (A layer). In addition, as the aliphatic polyester series resin contained in the A layer does not have an aromatic ring that absorbs ultraviolet light, it has the properties that almost no decrease in reflectance due to ultraviolet irradiation occurs.
Consequently, the light-reflecting material of the present invention not only excels as a reflective panel, or the like, in displays such as for personal computers and televisions, illumination instruments, illuminated signs, and the like, it can also be used satisfactorily as backlighting apparatus for liquid crystal display devices containing a member comprising a form-processed light-reflecting material called reflector.

### [Modes for carrying out the invention]

Hereinafter, embodiments of the present invention will be described; however, the scope of the present invention is not limited to the embodiments described below.
In the present Specification, the statement "X to Y" (X and Y are any numbers), unless specifically indicated otherwise, means "X or more and Y or less", including the meaning of "preferably greater than X and less than Y".

### <First embodiment>

The light-reflecting panel according to the first embodiment is a light-reflecting panel provided with the constitution in which a fine powder-containing polyester layer (also called "A layer") comprising an aliphatic polyester series resin and a fine powder filler is directly layered on one face or both faces of a metal plate.

For instance, among the liquid crystal display devices using the side light method, those applications requiring to be of particularly thin type, as in a notebook-type personal computer, there is also the necessity of thinning the thickness of the light-reflecting material as much as possible, such that, in prior art, a light-reflecting material with a silver-deposited PET film layered onto a metal plate is used, although it is comparatively expensive.
Meanwhile, in applications in which thickness is allowed to some extent, such as in monitors and liquid crystal televisions, a light-reflecting material with a white polyester film layered onto a metal plate is used, which is less costly than, and has approximately an equivalent reflection capability to, a silver-deposited PET film. For the white polyester film, this film conferred with reflective capability by adding inorganic particles such as titanium oxide or barium sulfate, or those films with fine bubbles within the film have been used.
However, due to restrictions in the film fabrication, these films have the problems of giving rise to the necessity of providing separately a high melting point polyester layer on the surface layer of the layer conferred with the reflection capability, and in addition, giving rise to detachment in the form-processing of a reflector, or the like, even if the white polyester is heat-fused directly onto the metal plate, as the adhesion firmness is poor. Therefore, as in the above-mentioned Patent Reference 2, there is the necessity of providing separately an adhesive layer on the metal plate side, and further layering a white polyester film thereover.

In addition, a generic white polyester film uses a polyester comprising an aromatic polyester series resin, and as aromatic rings contained in the molecular chain thereof absorb ultraviolet light, it has the disadvantage that when exposed to ultraviolet light, the reflective film deteriorates, becomes yellow, and the reflectance of the reflective film decrease. In addition, to limit yellowing and drop in reflectance due to ultraviolet light, although white polyester films provided with a coat layer having ultraviolet light absorptive power on the surface layer are also known, since, as mentioned earlier, a coat layer is further provided separately from the adhesive layer, they have the disadvantage that the total thickness of the film per se become thicker.

The light-reflecting panel according to the first embodiment allows an excellent light reflectivity to be obtained by the refractive scatter due to a difference in the refractive indices of the aliphatic polyester series resin and the fine powder filler contained in the fine powder containing polyester layer (A layer). Moreover, as the aliphatic polyester series resin contained in the fine powder-containing polyester layer does not have an aromatic ring that absorbs ultraviolet light, it has the properties that almost no decrease in reflectance due to ultraviolet irradiation occurs. In addition, as layering is possible directly onto a metal plate without using an adhesive, the light-reflecting panel can be of the thin type.
Consequently, the light-reflecting material of the embodyment not only excels as a reflective panel, or the like, in a displays such as for personal computers and televisions, illumination instruments, illuminated signs, and the like, it can also be used satisfactorily as backlighting apparatus for liquid crystal display devices containing a member comprising a form-processed light-reflecting material called reflector.

Hereinafter, the constitution, characteristics, application, manufacturing method, and the like, of the light-reflecting panel according to the first embodiment will be described in detail.

The A layer of the light-reflecting material according to the present embodiment is a layer comprising as the main constituents an aliphatic polyester series resin and a fine powder filler.
Herein, main constituent is meant to allow, within limits that do not impede the function of the constituent, inclusion of other constituents; the proportion of content in main constituent is not limited in particular, and it is preferable that the main constituent occupies 50 percent in mass or greater, among whi ch 70 percent in mass or greater, in particular 80 percent in mass or greater, and especially 90 percent in mass or greater.

The A layer constituting the light-reflecting panel according to the present embodiment is a layer that enables light reflectivity of the light-reflecting panel, and can be formed, for instance, by layering a film or fabricating a thin film layer. In addition, it may comprise two or more species layered layers.

### (Aliphatic polyester series resin)

Hereinafter, the aliphatic polyester series resin contained in the fine powder-containing polyester layer (A layer) will be described.
For the aliphatic polyester series resin, those synthesized chemically, those synthesized by fermentation by a microorganism, and mixtures thereof can be used.
Regarding chemically synthesized aliphatic polyester series resins, aliphatic polyester series resins obtained by ring-opening polymerization of lactone, such as, poly ε-caprolactone, aliphatic polyester series resins obtained by polymerizing a dibasic acid and a diol, such as, polyethylene adipate, polyethylene azelate, polyethylene succinate, polybutylene adipate, polybutylene azelate, polybutylene succinate, polybutylene succinate adipate, polytetramethylene succinate, and cyclohexane dicarboxylic acid/cyclohexane dimethanol condensation product, aliphatic polyester series resins obtained by polymerizing a hydroxycarboxylic acid, such as, polylactic acid and polyglycol, aliphatic polyesters with a portion of the ester bonds from the aforementioned aliphatic polyesters, for instance 50% or less of the total ester bond has been replaced by an amide bond, ether bond, urethane bond or the like, and the like, can be cited.
In addition, regarding aliphatic polyester series resins synthesized by fermentation by a microorganism, polyhydroxybutyrate, co-polymers of hydroxybutyrate and hydroxyvalerate, and the like, can be cited.
As aliphatic polyester series resins contain no aromatic ring in the molecular chain, they do not give rise to ultraviolet light absorption. Consequently, the fine powder-containing polyester layer (A layer) constituting the light-reflecting material does not deteriorate and become yellow due to by the ultraviolet light emitted from a light source such as a liquid crystal display device, and light reflectivity little decreases over time.

The refractive index of the aliphatic polyester series resin is preferably less than 1.52. The reflection capability of the light-reflecting material according to the present embodiment is mainly exerted by the refractive scatter at the interface of the aliphatic polyester series resin and the fine powder filler contained in the light-reflecting material. That is to say, a higher reflection capability can be obtained if the difference in the refractive indices of the aliphatic polyester series resin and the fine powder filler is larger. Consequently, if the refractive index of the aliphatic polyester series resin is less than 1.52, the difference in the refractive index with the fine powder filler becomes larger, which is preferred.
The difference in the refractive indices of the aliphatic polyester series resin and the fine powder filler is preferably 0.15 or more, and more preferably 0.20 or more.
If the refractive index of the aliphatic polyester series resin is less than 1.52, the condition of a difference in the refractive index with the fine powder filler of 0.15 or more is readily maintained, and the types of fine powder filler that can be combined become abundant.

The melting point of the aliphatic polyester series resin is preferably in the range of 150°C to 230°C. If the melting point is 150°C to 230°C, firm adhesion with the metal plate can be maintained sufficiently without using an adhesive, while at the same time, limiting the influence of the heat when layering onto the metal plate, allowing for a prevention of a decrease in the reflection capability of the light-reflecting panel.
Note that the melting point referred to herein is a value measured by differential scanning calorimetry (DSC).

Lactic acid series polymers are aliphatic polyester series resins that are particularly preferred as aliphatic polyester series resins used in the present embodiment. As lactic acid series polymers are resins that are manufactured from raw materials from plant origin and have the property of being biodegradable, not only do they excel on the point that the burden on the environment is small, as the refractive index is extremely low, on the order of 1.46, the difference in the refractive indices of aliphatic polyester series resin and fine powder filler becomes large, the condition of 0.15 or more in the difference is readily achieved, allowing a high reflection capability to be obtained readily.

Herein, a homopolymer of D-lactic acid or L-lactic acid, or a co-polymer thereof, suffice as the lactic acid series 5 polymer used in the present embodiment. Concretely, poly (D-lactic acid) of which the structural unit is D-lactic acid, poly(L-lactic acid) of which the structural unit is L-lactic acid, furthermore, poly(DL-lactic acid), which is a co-polymer of L-lactic acid and D-lactic acid, exist, and, in addition, mixtures thereof are also included.

The lactic acid series polymer can be manufactured by well knownmethods suchas the condensation polymerization method and the ring-opening polymerization method. For instance, with the condensation polymerization method, a lactic acid series polymer having any composition can be obtained by direct dehydration-condensation polymerization of D-lactic acid, L-lactic acid or mixtures thereof. In addition, with the ring-opening polymerization method, a lactic acid series polymer having any composition can be obtained by ring-opening polymerization of lactide, which is a cyclic dimer of lactic acid, as necessary using a polymerization regulator and the like, in the presence of a prescribed catalyst.
Regarding the above lactide, L-lactide, which is a dimer of L-lactic acid, D-lactide, which is a dimer of D-lactic acid, and DL-lactide, which is a dimer of D-lactic acid and L-lactic acid, exist, and by mixing and polymerizing these as necessary, a lactic acid series polymer having any composition and crystallinity can be obtained.

The lactic acid series polymer has a constituent ratio of D-lactic acid and L-lactic acid preferably of D-lactic acid:L-lacticacid=100:0 to 85:15 or D-lacticacid:L-lactic acid=0:100 to 15:85, and more preferably D-lactic acid:L-lactic acid=99.5:0.5 to 95:5 or D-lactic acid:L-lactic acid=0.5:99 - 5 to 5:95. A lactic acid series polymer with a the constituent ratio of D-lactic acid and L-lactic acid of 100:0 or 0:100 tends to demonstrate extremely high crystallinity, highmeltingpoint, and excels in heat resistance and mechanical properties. That is to say, it is preferable on the point that increasing heat resistance and mechanical properties since the resin crystallizes when stretching or heating the fine powder-containing polyester layer (A layer) constituting the light-reflecting material. On the other hand, a lactic acid series polymer constituted by D-lactic acid and L-lactic acid is provided with flexibility, and is preferred on the point of improved molding stability and stretching stability of the light-reflecting material.

In addition, regarding the lactic acid series polymer, lactic acid series polymers with different co-polymerization ratios of D-lactic acid and L-lactic acid may be blended. In this case, it suffices that the average value of the co-polymerization ratios of D-lactic acid and L-lactic acid of the two species or more of lactic acid series polymers falls within the above limits. Heat resistance can be adjusted by blending homopolymers and co-polymers of D-lactic acid and L-lactic acid.

Regarding the molecular weight of the lactic acid series polymer, the weight average molecular weight is preferably 50,000 or higher, more preferably 60,000 or higher and 400,000 or lower, and particularly preferably 100,000 or higher and 300, 000 or lower. If the weight average molecular weight of the lactic acid series polymer is 50, 000 or higher, practical physical properties such as mechanical properties and heat resistance can be maintained, and if 400,000 or lower, poor form processability due to excessively high molten viscosity can be prevented.

### (Fine powder filler)

In the following, the fine powder filler contained in the fine powder-containing polyester layer (A layer) will be described.

Organic fine powders, mineral fine powders, and the like, can be cited as fine powder fillers used in the present embodiment.
At least one species chosen from cellulose series powders such as wood powder and pulp powder, polymer beads and polymer hollow particles is preferred as organic fine powder.
At least one species chosen from calcium carbonate, magnesium carbonate, barium carbonate, magnesium sulfate, barium sulfate, calcium sulfate, zinc oxide, magnesium oxide, calcium oxide, titanium oxide, alumina, aluminum hydroxide, hydroxyapatite, silica, mica, talc, kaolin, clay, glass powder, asbestos powder, zeolite, silicic acid clay and the like, is preferred as mineral fine powder. When light reflectivity of the light-reflecting material obtained is taken into consideration, those with a large difference in refractive index with aliphatic polyester series resin are preferred, that is to say, those with a large refractive index, 1.6 or greater as criteria, are preferred as mineral fine powders. Concretely, using calcium carbonate, barium sulfate, titanium oxide or zinc oxide, with refractive indices of 1.6 or greater, is more preferred, and among these, titanium oxide is particularly preferred. Using titanium oxide, high reflection capability can be conferred to the light-reflecting material with less filling amount, and in addition, light-reflecting material with high reflection capability can be obtained even if the thickness is thin.

Crystalline type titanium oxides such as, for instance, anatase type titanium oxide and rutile type titanium oxide can be cited as titanium oxide used in the present embodiment. From the point of view of increasing the difference in refractive index with the base resin, titanium oxide with a refractive index of 2.7 or more is preferred, and, for instance, the use of rutile type titanium oxide is preferred.

In addition, among the titanium oxides, the use of high purity titanium oxide is particularly preferred.
Herein, high purity titanium oxide means, titanium oxide with low light absorption capability with respect to visible light, that is to say, those with a low content of coloring elements, such as, vanadium, iron, niobium, copper, and manganese. In the present invention, titanium oxide with a content of vanadium contained in the titanium oxide of 5ppm or less, is referred to as high purity titanium oxide.

As high purity titanium oxide, for instance, one manufactured by the chlorine method process can be cited. In the chlorine method process, a rutilite having titanium oxide as the main constituent is reacted with a chlorine gas in a high temperature furnace at on the order of 1, 000°C, to first generate, titanium tetrachloride. Next, a high purity titanium oxide can be obtained by burning the titanium tetrachloride with oxygen. Note that, although the sulfuric acid method process also exists as an industrial manufacturing method of titanium oxide, in the titanium oxide obtained by this method, coloring elements, such as, vanadium, iron, copper, manganese and niobium are contained in large amounts, such that the light absorption capability with respect to the visible light increases. Consequently, high purity titanium oxide is difficult to obtain with the sulfuric acid method process.

In addition, regarding the titanium oxide used in the present embodiment (high purity titanium oxide), if the surface is treated by coating with at least one species of inert inorganic oxide chosen from among silica, alumina and zirconia, the light resistance of the light-reflecting material is increased, the photocatalytic activity of titanium oxide is inhibited, and high light reflectivity of titanium oxide is not impaired, which is preferred. Even more preferred are those treated by coating with two species or three species of inert inorganic oxides used in combination, among which particularly preferred is a combination of two species or three species of inert inorganic oxides in which silica is required.

Note that a mineral fine powder and an organic fine powder shown in examples as described previously may be used in combination as the fine powder filler. In addition, different fine powder fillers can be applied in combination and, for instance, titanium oxide and another fine powder filler, [or] a high purity titanium oxide and another fine powder filler may be applied in combination.

In order to increase dispersibility of the fine powder filler into the resin, those fine powder fillers having a surface treatment applied with silicon series compound, multivalent alcohol series compound, amine series compound, fatty acid, fatty acid ester or the like on the surface of the fine powder filler may be used.
For instance, at least one species of inorganic compound chosen from siloxane compound, silane coupling agent, and the like, can be used as surface treatment agent, and these can also be used in combination. In addition, at least one species of organic compound chosen from the group comprising siloxane compound, silane coupling agent, polyol and polyethyleneglycol, or the like, can be used. In addition, these inorganic compounds and organic compounds may be used in combination.

The fine powder filler preferably has a particle size of 0.05µm or larger and 15µm or smaller, and more preferably a particle size of 0.1µm or larger and 10µm or smaller. If the particle size of the fine powder filler is 0.05µm or larger, as dispersibility into the aliphatic polyester series resin does not decrease, a homogeneous fine powder-containing polyester layer (A layer) constituting the light-reflecting material is obtained. In addition, if the particle size is 15µm or smaller, a light-reflecting material having high reflectance is obtained without the formed gap being rough.

In addition, when using titanium oxide as fine powder filler, the particle size thereof is preferably 0.1µm or larger and 1µm or smaller, and more preferably 0.2µm or larger and 0.5µm or smaller. If the particle size of the titanium oxide is 0.1µm or larger, dispersibility into aliphatic polyester series resins is satisfactory, and a homogeneous light-reflecting material can be obtained. In addition, if the particle size of titanium oxide is 1µm or smaller, the interface between the aliphatic polyester series resin and titanium oxide is firmly formed, and a high reflection capability can be obtained for the light-reflecting material.

In view of light reflectivity, mechanical properties, productivity, and the like, of the light-reflectingmaterial, the content of fine powder filler contained in the fine powder-containing polyester layer (A layer) is, with respect to the overall mass of the fine powder-containing polyester layer (A layer), preferably 10 percent in mass or greater and 60 percent in mass or less, more preferably 20 percent in mass or greater and 55 percent in mass or less, and particularly preferably 20 percent in mass or greater and 50 percent in mass or less.
If the content in fine powder filler is 10 percent in mass or greater, the a sufficient area of the interface between the resin and fine powder filler can be maintained, allowing the light-reflecting material to be conferred with a high light reflectivity. In addition, if the content in fine powder filler is 60 percent in mass or less, the mechanical characteristics required for the light-reflecting material can be maintained.

### (Gaps)

The fine powder-containing polyester layer (A layer) may internally have gaps. Having gaps allows reflection capability to be obtained also from the refractive scatter due to differences in refractive indices of the aliphatic polyester series resin and gaps (air), and the fine powder filler and gaps (air), in addition to the refractive scatter due to differences in refractive indices of the aliphatic polyester series resin and the fine powder filler.

For instance, gaps can be formed in a fine powder-containing polyester layer (A layer) by stretching the fine powder-containing polyester layer (A layer) containing a fine powder filler, which constitutes the light-reflecting material. This is due to a difference in the stretching behavior of the resin and fine powder filler at stretching time. If stretching is carried out at a temperature that is appropriate for the resin, the resin that is to become the matrix is stretched, but the fine powder filler will tend to remain in the same state, such that the interface between the resin and the fine powder filler separates, forming a gap. Consequently, an even better reflection capability can be conferred to the light-reflecting material by including a fine powder filler in an efficiently dispersed state and forming gaps within the fine powder-containing polyester layer (A layer).

In addition, gaps can be formed in the fine powder-containing polyester layer (A layer) also by foaming, by adding a foaming agent to the fine powder-containing polyester layer (A layer). The method of foaming by adding an organic or inorganic pyrolytic foaming agent or volatile foaming agent to the aliphatic polyester series resin can be cited as a method to form gaps in the fine powder-containing polyester layer (A layer) by foaming. In addition, the method of foaming by introducing CO₂ or N₂ in a super critical state into the aliphatic polyester series resin can also be cited.

The proportion in the fine powder-containing polyester layer (A layer) occupied by the gaps, that is to say porosity (proportion of the volume part in the A layer occupied by the gaps, and in the case the gaps are formed by stretching, can be determined by "porosit y (%) = [(density of unstretched A layer- density of A layer after stretching)/density of unstretched A layer]×100") is preferably 50% or less, and more preferably in the range of 5% or greater and 50% or less. In addition, the porosity is more preferably 20% or greater, and particularly preferably 30% or greater. If the porosity is 50% or less, the mechanical strength of the fine powder-containing polyester layer (A layer) constituting the light-reflecting material is maintained, such that fracture during manufacture and lack of durability during use, such as heat resistance, do not occur.

Note that when titanium oxide (high purity titanium oxide) is used as the fine powder filler, high light reflectivity can be obtained regardless of the presence of gaps within the fine powder-containing polyester layer (A layer).
For instance, even when the fine powder-containing polyester layer (A layer) does not have gaps (that is to say, porosity=0%), high light reflectivity can be obtained if titanium oxide is used as the fine powder filler. This is supposed to be due to the facts that the refractive scatter due to the difference in refractive indices of aliphatic polyester series resin and titanium oxide is large, while at the same time, the hiding power of titanium oxide is high.

### (Other constituents)

The fine powder-containing polyester layer (A layer) may contain a resin other than those described above within a range that does not impede the effects of the present invention.
In addition, it may contain anti-hydrolysis agent, oxidation inhibitor, light stabilizer, heat stabilizer, lubricant, dispersant, ultraviolet light absorbent, white pigment, fluorescent whitener, and other additives within a range that does not impede the effects of the present invention.

For instance, when using the light-reflecting material according to the present embodiment in liquid crystal display applications such as car navigation systems for automobiles, in-car small televisions and the like, carbodiimide compound, which is an anti-hydrolysis agent, or the like, can be added in order to confer durability with respect to an environment with a higher temperature and a higher humidity. Carbodiimide compounds having, for instance, the base structure of the following general formula can be cited as the preferred [compound].

-(N=C=N-R-)n-

where n represents an integer of 1 or greater, R represents an organic bond unit. For instance, R can be any of an aliphatic, an alicyclic and an aromatic. In addition, regarding n, an adequate integer is selected, in general, between 1 and 50.
Concretely, for instance, bis(dipropyl phenyl) carbodiimide, poly(4,4'-diphenyl methane carbodiimide), poly(p-phenylene carbodiimide), poly(m-phenylene carbodiimide), poly(tolyl carbodiimide), poly(diisopropyl phenylene carbodiimide), poly(methyl-diisopropyl phenylene carbodiimide), poly(triisopropyl isopropyl phenylene carbodiimide) and the like, and monomers thereof can be cited as carbodiimide compounds. These carbodiimide compounds can be used alone, or two or more species can be used in combination.

Adding 0.1 parts inmass to 3. 0 parts inmass of carbodiimide compound with respect to 100 parts in mass of aliphatic polyester series resin contained in the fine powder-containing polyester layer (A layer) is preferred. If the quantity of carbodiimide compound added is 0.1 parts in mass or greater, a sufficient effect of improvement in the resistance against hydrolysis is expressed in the fine powder-containing polyester layer (A layer). In addition, if the quantity of carbodiimide compound added is 3.0 parts in mass or less, the coloration of the fine powder-containing polyester layer (A layer) being low, a high light reflectivity is obtained.

### (Layering)

The fine powder-containing polyester layer (A layer) used in the present embodiment can also have constitutions in which two or more species of layers having different amounts of heat of fusion are layered. Among them, preferred are a two-layer constitution, which constitution is such that the amount of heat of fusion of the aliphatic polyester series resin that contained in the layer layered on the metal plate and in contact with the metal plate is less than the amount of heat of fusion of the aLiphatic polyester series resin that contained in the surface layer, and a three-layer constitution, which constitution is such that the amount of heat of fusion of the aLiphatic polyester series resin contained in the front and the back layers is less than the amount of heat of fusion of the aliphatic polyester series resin contained in the middle layer.
If the fine powder-containing polyester layer (A layer) has a layered constitution of two or more species, not only the characteristics of each layer contained in the fine powder-containing polyester layer (A layer) can be conferred, and in particular, the adhesive strength between the fine powder-containing polyester layer (A layer) and the metal plate can be increased by layering a flexible aliphatic polyester series resin with a small amount of heat of fusion onto a metal plate.
Note that the amount of heat of fusion used herein is a value measured by differential scanning calorimetry (DSC, rate of temperature increase: 10°C/min).

To adjust the amount of heat of fusion, for instance, when using lactic acid series polymer in the fine powder-containing polyester layer (A layer), adjusting the constituent ratio of D-lactic acid and L-lactic acid, as described previously leads to different the crystallinities of the lactic acid series polymers, and owing to this, the melting points and the amounts of heat of fusion can also be adjusted. That is to say, with a lactic acid series polymer that is a homopolymer of the D isomer or the L isomer, the lactic acid series polymer can have an amount of heat of fusion that is high, allowing for a lactic acid series polymer with excellent heat resistance and mechanical properties. In addition, with a lactic acid series polymer that is a co-polymer, the lactic acid series polymer can have an amount of heat of fusion that is low, allowing for a flexible lactic acid series polymer (excels in molding stability and stretching stability).
Consequently, when the fine powder-containing polyester layer (A layer) is a three-layer constitution, and a lactic acid series polymer is used for each layer, a fine powder-containing polyester layer (A layer) comprising a three-layer constitution, in which a lactic acid series polymer that is a homopolymer with a high amount of heat of fusion serves as the middle layer, and lactic acid series polymers that are co-polymers with low amounts of heat of fusion serve as the front and back layers, is preferred.
The light-reflecting pane 1 using a fine powder-containing polyester layer (A layer) comprising such a three-layer constitution, can be layered onto a metal plate as a single film by co-extrusion or the like of the homopolymer lactic acid series polymer and the co-polymer lactic acid series polymer.

As lactic acid series polymer used for the surface in contact with the metal plate, those with a constituent ratio of D-lactic acid and L-lactic acid of D-lactic acid:L-lactic acid=99.5:0.5 to 85:15, or, D-lactic acid:L-lactic acid=0.5:99.5 to 15:85, are preferred. In addition, as lactic acid series polymer used for the side for reflection use, those with a constituent ratio of D-lactic acid and L-lactic acid of D-lactic acid:L-lactic acid=99.5:0.5 to 90:10, or, D-lactic acid:L-lactic acid=0.5:99.5 to 10: 90, are preferred.

Note that when the fine powder-containing polyester layer (A layer) is to be of multiple-layer constitution, it suffices that a fine powder filler is contained in one layer or more layers, and in addition, a fine powder filler may be contained in the entirety of the layers.
In addition, the fine powder-containing polyester layer (A layer) may have gaps in one layer or more respective layers, or may contain gaps in the entirety of each of the layers.

In addition, when the fine powder-containing polyester layer (A layer) is to be of layered constitution, it may contain, within a range that does not impede the effects of the present invention, as described previously, a resin other than those described above, an anti-hydrolysis agent, an oxidation inhibitor, a light stabilizer, a heat stabilizer, a lubricant, a dispersant, an ultraviolet light absorbent, a white pigment, a fluorescent whitener, and other additives in at least one layer or more of the layers, and it may also contain a resin and other additive in the entirety of the layers.

In particular, it has been verified, although the cause is not clear, that the adhesive strength between the fine powder-containing polyester layer (A layer) and the metal plate increases when a lubricant is added to the layer in contact with the metal plate. For instance, addition to the fine powder-containing polyester layer (A layer) is sufficient if the fine powder-containing polyester layer (A layer) is to be a monolayer, in addition, adding it to the aliphatic polyester series resin contained in the front and back layers is sufficient if [the fine powder-containing polyester layer (A layer)] is to be of a three-layer constitution as described above.

So-called internal lubricants and external lubricants can be used as lubricants. For instance, internal lubricants, such as, fatty acid series lubricants, alcohol series lubricants, aliphatic amide series lubricants and ester series lubricants, and external lubricants, such as, acrylic series lubricants and hydrocarbon series lubricants may be cited, and preferably, addition of acrylic series lubricants and hydrocarbon series lubricants is adequate. In addition, the exemplified lubricants may be used in an adequate combination.

Acrylic acid ester monomers, such as, methyl acrylate, ethyl acrylate, n-butyl acrylate, isobutyl acrylate, 2-ethyl hexyl acrylate, benzyl acrylate, cyclohexyl acrylate, phenyl acrylate, chloroethyl acrylate, homopolymers of or co-polymers combining two species or more of methacrylic acid ester monomers, such as, methyl methacrylate, ethyl methacrylate, n-butyl methacrylate, 2-ethyl hexyl methacrylate, benzyl methacrylate, cyclohexyl methacrylate, phenyl methacrylate, chloroethyl methacrylate, may be cited as acrylic series lubricants. In addition, the above-mentioned monomer and an aromatic vinyl compound, such as, styrene, α-methyl styrene or vinyl toluene, or a vinyl cyan compound, such as, acrylonitrile or methacrylonitrile, may be combined and co-polymerized. In addition, the above-mentioned monomer and a multifunctional monomer, such as, ethylene glycol dimethacrylate, 1,3-butylene glycol dimethacrylate, 1,4-butylene glycol dimethacrylate, propylene glycol dimethacrylate or alkylene glycol diacrylate, may be co-polymerized.
The molecular weight of the above acrylic series lubricant in weight average molecular weight is preferably 50, 000 or greater and 3,000,000 or Less, and more preferably 100,000 or greater and 1,000,000 or less.

In addition, liquid paraffin, paraffin wax, micro wax, polyethylene wax, polypropylene wax, natural wax, synthetic wax and the like, and mixed products thereof, can be cited as hydrocarbon series lubricants.

The content of these lubricants in the aliphatic polyester series resin contained in the fine powder-containing polyester layer (A layer) is preferably 0.05 percent in mass or greater and 10 percent in mass or less, and more preferably 0. 1 percent in mass or greater and 5 percent in mass or less.

### (Metal plate)

In the following, the metal plate contained in the light-reflecting panel according to the present embodiment will be described.
According to the type of liquid crystal display device using the reflector, stainless steel plates with a thickness of 0.05mm to 0.4mm, aluminum alloy plates with a thickness of 0.1 to 0.6mm, brass plates with a thickness of 0.2 to 0.4mm, can be cited as metal plates used in the present embodiment; however [the plates] are not limited to these.

It is desirable to subject to surface treatment at least one side of the fine powder-containing polyester layer (A layer), or, the surface on the side of the metal plate where the fine powder-containing polyester layer (A layer) is to be heat-fused, to improve the adhesion/firm adhesion of the fine powder-containing polyester layer (A layer) and the metal plate.
Chemical treatment, discharge treatment and electromagnetic wave radiation treatment can be given as surface treatments.
Treatment methods, such as, silane coupling agent treatment, acid treatment, alkaline treatment, ozone treatment and ion treatment can be given as chemical treatments.
Treatment methods, such as, corona discharge treatment, glow discharge treatment, arc discharge treatment and low temperature plasma treatment can be given, as discharge treatments.
Treatment methods, such as, ultraviolet light treatment, X-ray treatment, gamma ray treatment and laser treatment can be given as electromagnetic wave radiation treatments.
Among these, silane coupling agent treatment, having a strong effect of increasing adhesion in particular of inorganic objects (metal plate) and organic objects (fine powder-containing polyester layer (A layer)), and corona discharge treatment, allowing adhesion to be increased efficiently under atmospheric pressure, are preferred.

### (Layering of fine powder-containing polyester layer (A layer) and metal plate)

As the light-reflecting material according to the present embodiment allows a fine powder-containing polyester layer (A layer) having high reflection capability and heat resistance to be heat-fused and layered onto a metal plate directly without using adhesive, there by allowing for a light-reflecting panel that is thin and with good workability and formability.
To give examples of layering methods, a fine powder-containing polyester layer (A layer) pre-formed into a film shape may be directly heat-fused onto the metal plate, in addition, a melted fine powder-containing polyester layer (A layer) may be extruded onto a metal plate to form a film.

### (Thickness)

Although the thickness of the fine powder-containing polyester layer (A layer) is not limited in particular, a thickness of 20µm to 100µm is preferred, in view of applications as light-reflecting material, in particular, in small, thin reflective panel applications. The use of a light-reflecting material comprising a fine powder-containing polyester layer (A layer) of such thickness allows for uses also in, for instance, small, thin liquid crystal displays, such as, notebook-type personal computers, cellular phones and the like.

The thickness of the light-reflecting material according to the present embodiment differs depending on the desired application and the metal plate used, and is not limited in particular; however, in view of applications as light-reflecting material, in particular, in small, thin reflective panel applications, 0.05mm to 1mm is preferred, among which 0.1mm to 0.7mm is preferred.

### (Properties of the light-reflecting panel)

With respect to light with a wavelength of 550nm, the light-reflecting panel according to the present embodiment has a reflectance of preferably 95% or greater, and more preferably 97% or greater, as measured from the side for reflection use. If the reflectance is 95% or greater, satisfactory reflection properties are demonstrated, and allows sufficient brightness to be provided to screens such as of liquid crystal displays. Note that the fine powder-containing polyester layer (A layer) used in the present embodiment can maintain an excellent average reflectance even after exposing to ultraviolet light.

A thermal property of the fine powder-containing polyester layer (A layer) constituting the light-reflecting panel is a thermal shrinkage ratio when left for 5 minutes at 120°C of preferably 10% or less and more preferably 5% or less.
For instance, when integrating as reflective panel in car navigation systems for automobiles, in-car small televisions and the like, there is the necessity of preventing the occurrence of ripples and wrinkles even under high temperature environment, in view of the temperature inside a car under blazing sun in the summer. That is to say, heat resistance and dimensional stability under heating environment are required. Consequently, as described previously, a thermal shrinkage ratio when left for 5 minutes at 120°C of 10% or less is preferred, as dimensional stability, which maintains planarity of fine powder-containing polyester layer (A layer), is ensured, and detachment from the metal plate also does not occur.

### (Application)

From the fact that it is provided simultaneously with a high reflection capability and a high heat resistance, as described above, the light-reflecting material according to the present embodiment not only excels as reflective panel, or the like, in displays such as for personal computers and televisions, illumination instruments, illuminated signs, it can also be used suitably as a member called reflector comprising a form-processed light-reflecting material.

### (Manufacturing method)

The light-reflecting panel according to the present embodiment can be manufactured in a way whereby (1) a fine powder-containing polyester layer (A layer) pre-formed into a film shape, heat-fused and layered directly onto a metal plate, without using an adhesive. In addition, it can also be manufactured in a way whereby (2) a resin composition constituting the fine powder-containing polyester layer (A layer) is melted and extruded onto a metal plate to form a film.
Hereinafter, in regard to methods for manufacturing the light-reflecting material according to the present embodiment, the manufacturing method in (1) will be described; however the methods are not limited to such manufacturing methods.

Regarding the fine powder-containing polyester layer (A layer), a polyester series resin composition comprising an aliphatic polyester series resin and a fine powder filler is obtained, this is melted to form a film, and as necessary stretched into a film shape. Hereinafter, one example will be described in detail.

First, a resin composition combining an aliphatic polyester series resin with a fine powder filler and as necessary other additives, such as, anti-hydrolysis agent, is made. Concretely, after a fine powder filler, an anti-hydrolysis agent, and the like, are added to an aliphatic polyester series resin and mixed with a ribbon blender, a tumbler, a Henschel mixer or the like, the resin composition is obtained, by kneading at the temperature of the melting point of the resin or higher (for instance, 170°C to 230°C in the case of lactic acid series polymer), using a Banbury mixer, a uniaxial or biaxial extruder, or the like.
Note that the resin composition may also be obtained by adding using separate feeders, or the like, prescribed quantities of aliphatic polyester series resin, fine powder filler, anti-hydrolysis agent, and the like. In addition, the aliphatic polyester series resin composition can be made to have a desired concentration by pre-making a so-called master batch, which combines an aliphatic polyester series resin with a fine powder filler, an anti-hydrolysis agent and the like at high concentrations, and mixing this master batch and the aliphatic polyester series resin.

Next, the resin composition obtained in this way is melted and formed into a film. For instance, the resin composition is dried, supplied to the extruder, heated to the temperature of the melting point of the resin or higher, and melted. In so doing, the resin composition may be supplied to the extruder without drying; however, if not drying, the use of a vacuum vent is preferred during the melt-extrusion.
Conditions such as extrusion temperature need to be set taking into account such facts as the molecular weight decreases due to decomposition, and for instance, the extrusion temperature is preferably in a range of 170°C to 230°C when a lactic acid series polymer is used as the aliphatic polyester series resin.
The molten resin composition is extruded from a slit-shaped discharge port of a T die, brought in firm contact with a cooling roll and solidified, forming a cast sheet (unstretched state), and a fine powder-containing polyester layer film is obtained.

The obtained fine powder-containing polyester layer film can also be stretched 1.1 fold or more, at least in one axial direction. By stretching, gaps having fine powder filler as nuclei are formed within the film, forming interfaces between the resin and gaps, and interfaces between gaps and the fine powder filler, increasing the effect of refractive scatter arising at the interfaces, which allows the light reflectivity of the fine powder-containing polyester layer (A layer) to be further increased.

The stretch temperature when stretching is preferably a temperature that is within a range on the order of the glass transition temperature (Tg) of the resin to (Tg+50°C), for instance, in the case of a lactic acid series polymer, 50 °C or above and 90°C or less, is preferred. If the stretch temperature is in this range, stretching can be carried out stably without rupture at stretching, in addition, stretch orientation degree becomes high, and as a result thereof, porositybecomes greater, such that a fine powder-containing polyester layer (A layer) having high reflectance is obtained more readily.

More preferably, the fine powder-containing polyester layer film is biaxially stretched. By stretching biaxially, the porosity becomes even greater, allowing the light reflectivity of the fine powder-containing polyester layer (A layer) to be further increased.
The stretch sequence of the biaxial stretching is not limited in particular, and it does not matter whether it is, for instance, simultaneous biaxial stretching or successive stretching. After melt-fabrication of the film using a stretching equipment, stretching in the MD by roll stretching and then stretching in the TD by tenter stretching, or biaxial stretching by tubular stretching or the like, may be carried out.

The stretch scale factor when uniaxially stretching or biaxially stretching is suitably determined according to the composition of the fine powder-containing polyester layer (A layer), the stretching means, the stretching temperature and the target product morphology. 5 fold or more stretching as area scale factor is preferred and or more stretching is more preferred. If the cast sheet is stretched so that the area scale factor becomes 5 fold or more, a porosity of 5% or greater within the fine powder-containing polyester layer (A layer) can be realized, by stretching to 7 fold or mo re, a porosity of 20% or greater can be realized, and by stretching to 7.5 fold or more, a porosity of 30% or greater can also be realized.

In addition, carrying out heat treatment is desirable, in order to confer heat resistance and dimensional stability to the obtained fine powder-containing polyester layer film.
The heat treatment temperature of the film is preferably 90 to 160°C, and more preferably 110 to 140°C. The time of treatment required for the heat treatment is preferably 1 second to 5 minutes. In addition, there is no limitation regarding stretch equipments and the like, carrying out tenter stretching, which allows heat fixation treatment to be carried out after stretching, is preferred.

Note that, when fine powder-containing polyester layer (A layer) is to be of a multilayered constitution of two or more species, films may be pre-formed using the resin composition contained in each layer and these films may be layered to manufacture the fine powder-containing polyester layer film; in addition, the respective resin compositions may be co-extruded to manufacture the layered film.

### (Layering of film and metal plate)

Next, fine powder-containing polyester layer film created as described previously is layered onto a metal plate to manufacture a light-reflecting material.
As a method for layering, a method can be given, whereby a film and a metal plate are supplied to a heat roll and heat-fused. In so doing, regarding the temperature for heat-fusing, performing at a temperature range of 140°C to 280°C is preferred, and a temperature range of 150°C to 210°C is more preferred, from the point of adhesive strength.
Note that it is also possible to heat so as to bring the temperature of the metal plate surface to on the order of the melting point of the aliphatic polyester resin contained in the fine powder-containing polyester layer, and heat-fusing with a rubber roll.

### <Second embodiment>

The light-reflecting panel according to the second embodiment is a light-reflecting material provided with a constitution in which a fine powder-containing polyester layer (hereinafter referred to a "A layer") comprising an aliphatic polyester series resin and a fine powder filler is layered over one side or both sides of a metal plate via a polyester resin adhesive layer (hereinafter referred to a "B layer") comprising a polyester resin.

In prior art reflective material, the adhesive strength between the metal plate and the reflective film was not sufficient, and the reflective film sometimes detached from the metal plate during forming process.
In contrast, with the light-reflecting panel according to the second embodiment, excellent light reflectivity can be obtained from the refractive scatter caused by the difference in the refractive indices of the aliphatic polyester series resin and the fine powder filler contained in the (A layer). Moreover, since the aliphatic polyester series resin contained in the A layer does not have aromatic rings that absorb ultraviolet light, almost no decrease of reflectance due to ultraviolet irradiation occurs, which is one characteristic of the second embodiment. In addition, the second embodiment has tne characteristic that, by intercalating a B layer with excellent adhesive strength to metal plate between the A layer and the metal plate, mechanical strength that does not provoke detachment due to cohesive failure at forming process can be conferred.
Consequently, the light-reflecting material of the present embodiment not only excels as a reflective panel, or the like, in displays such as for personal computers and televisions, illumination instruments, illuminated signs, and the like, it can also be used satisfactorily as backlighting apparatus for liquid crystal display devices containing a member comprising a form-processed light-reflecting material called reflector.

Hereinafter, the constitution, characteristics, application, manufacturing method, and the like, of the light-reflecting panel according to the second embodiment will be described in detail.

### (A layer)

The A layer of present embodiment is identical to the A layer of the above-mentioned first embodiment.

### (B layer)

The B layer of the present embodiment is a polyester resin adhesive layer having polyester resin as main constituent, and is predominantly a layer that confers firm adhesion between the A layer and the metal plate.
Herein, main constituent is meant to allow, within limits that do not impede the function of the constituent, inclusion of other constituents; the proportion of content in main constituent is not limited in particular, and it is preferable that the main constituent occupies 50 percent in mass or greater, among which 70 percent in mass or greater, In particular 80 percent in mass or greater, and especially 90 percent in mass or greater.
Hereinafter, the polyester resin adhesive layer constituting the B layer will be described.

Films comprising a polyester series resin can be used suitably as a polyester resin adhesive layer. Concretely, films comprising an aromatic polyester series resin or films comprising an aliphatic polyester series resin can be used suitably. [The film] can be layered with a metal plate at low temperature without loosing functions that the A layer has, such as, light reflectivity.

Aromatic polyester series resins, such as, polyethylene terephthalate, polyethylene isophthalate, polybutylene terephthalate, poly(1,4-cyclohexylene dimethylene)terephthalate, polyethylene-2,6-naphthalenedicarboxyate and polyethylene naphthalate, can be given as aromatic polyester series resins.
Aliphatic polyester series resins synthesized chemically, aliphatic polyester series resin synthesized via fermentation synthesis by microorganisms, and mixtures thereof, as shown in examples described previously, can be used as aliphatic polyester series resins.
The aromatic polyester series resins and the aliphatic polyester series resins are not limited to those given above as examples, and among them, polyethylene terephthalate, polyethylene isophthalate and lactic acid series polymer are preferred.

Films comprising a co-polymer polyester series resin can be used for the polyester resin adhesive layer (B layer). Concretely, the co-polymer polyester series resin has the of acid constituents and one or more species of multivalent alcohol constituents. In addition, the ester resin which has the ester repeating unit, in which, comprising one species, or two or more species of acid constituents and one species, or two or more species of multivalent alcohol constituents, is more preferable.
Co-polymer polyester series resins comprising one species, or two or more species of acid constituents chosen from among phthalic acid, isophthalic acid, terephthalic acid, naphthalene acid, oxalic acid, succinic acid, glutaric acid, adipic acid, pimelic acid, suberic acid, azelaic acid, sebacic acid, dodecadione acid and the like, and, one species, or two or more species of multivalent alcohols chosen from among ethylene glycol, diethylene glycol, triethylene glycol, 1,4-cyclohexanedimethanol, 1,2-propylene glycol, 1,4-butanediol, 1,5-pentadiol, 1, 6-hexadiol and the like, as ester repeating unit within the co-polymer polyester series resin, can be given. Preferable among these are films comprising a co-polymer containing isophthalic acid and terephthalic acid as acid constituents, and ethylene glycol and 1,4-cyclohexanedimethanol as multivalent alcohols.

The polyester resin adhesive layer contained in the B layer preferably contains a resin with a melting point in the range of 80°C to 270°C, and more preferably contains a resin with a range of 150°C to 250°C. If the melting point is 80°C to 270°C, a firm adhesion with the metal plate is ensured sufficiently without using an adhesive, while at the same time, influence of the heat when layering onto the metal plate is suppressed, allowing a decrease in the reflection capability of the light-reflecting panel to be prevented.
Note that the melting point referred to herein is a value measured by differential scanning calorimetry (DSC).

Preferably, the amount of heat of fusion of the polyester series resin contained in the B layer is less than the amount of heat of fusion of the aliphatic polyester series resin contained in the A layer. If the amount of heat of fusion of this polyester series re sin is low, the A layer and the metal plate can be layered at low temperature. Consequently, by intercalating the B layer between the A layer and the metal plate the adhesive strength of each layer can be raised, increasing the mechanical strength of the light-reflecting material.
Note that the amount of heat of fusion referred to herein is a value measured by differential scanning calorimetry (DSC).

For instance, when using a lactic acid series polymer as the polyester series resin contained in the B layer, an amount of heat of fusion of the lactic acid series polymer contained in the B layer that is smaller than the amount of heat of fusion of aliphatic polyester series resin contained in the A layer is preferred. In so doing, as the lactic acid series polymer has a melting point in the range of 80°C to 270°C not depending on the constituent ratio of D-lactic acid and L-lactic acid, lactic acid series polymers with the desired constituent ratio of D-lactic acid and L-lactic acid can be used, and among them, a lactic acid series polymer that is a co-polymer is preferred since the crystallinity of the lactic acid series polymer is lower, that is to say, the amount of heat of fusion is also lower.

In addition, the B layer can be a layer comprising a multilayered constitution of two or more different species. By having a B layer with a multilayered constitution, firm adhesion, layering conditions, and the like, of the A layer and B layer, film adhesion, layering conditions, and the like, of the B layer and the metal plate can be changed appropriately, allowing firm adhesion, reflection capability, mechanical strength, and the like, of the light-reflecting material as a whole, to be designed to be in preferred ranges.

The B layer may contain a fine powder filler described for the A layer. By having a fine powder filler in the B layer, reflection capability can also be obtained from the refractive scatter due to the difference in the refractive indices of the polyester series resin contained in the B layer and the fine powder filler, allowing the reflection capability of the light-ref lecting material to be further increased.

The B layer may have gaps within. If it has gaps, reflection capability can also be obtained from the refractive scatter due to the difference in the refractive indices of the polyester series resin contained in the B layer and the gaps (air), allowing the reflection capability of the light-reflecting material to be further increased.

### (Other constituents)

The B layer constituting the light-reflecting material according to the present embodiment may contain a resin other than those described above within a range that does not impede the effects of the present invention.
In addition, it may contain anti-hydrolysis agent, oxidation inhibitor, light stabilizer, heat stabilizer, lubricant, dispersant, ultraviolet light absorbent, white pigment, fluorescent whitener, and other additives within a range that does not impede the effects of the present invention.

For instance, it has been verified, although the cause is not clear, that the adhesive strength between the A layer and the B layer, and the adhesive strength between the B 5 layer and the metal plat increases when a lubricant is added to the polyester resin adhesive layer contained in the B layer.
So-called internal lubricants and external lubricants can be used as lubricants. For instance, internal lubricants, such as, fatty acid series lubricants, alcohol series lubricants, aliphatic amide series lubricants and ester series lubricants, and external lubricants, such as, acrylic series lubricants and hydrocarbon series lubricants may be cited, and preferably, addition of acrylic series lubricants and hydrocarbon series lubricants is adequate. In addition, the exemplified lubricants may be used in an adequate combination.

Acrylic acid ester monomers, such as, methyl acrylate, ethyl acrylate, n-butyl acrylate, isobutyl acrylate, 2-ethyl hexyl acrylate, benzyl acrylate, cyclohexyl acrylate, phenyl acrylate, chloroethyl acrylate, homopolymers of or co-polymers combining two species or more of methacrylic acid ester monomers, such as, methyl methacrylate, ethyl methacrylate, n-butyl methacrylate, 2-ethyl hexyl methacrylate, benzyl methacrylate, cyclohexyl methacrylate, phenyl methacrylate, chloroethyl methacrylate, may be cited as acrylic series lubricants. In addition the above-mentioned monomer and an aromatic vinyl compound, such as, styrene, α-methyl styrene or vinyl toluene, or a vinyl cyan compound, such as, acrylonitrile or methacrylonitrile, that have been combined and co-polymerized, may also be used. In addition, the above-mentioned monomer and a multifunctional monomer, such as, ethylene glycol dimethacrylate, 1,3-butylene glycol dimethacrylate, 1,4-butylene glycol dimethacrylate, propylene glycol dimethacrylate or alkylene glycol diacrylate, that have been co-polymerized, may also be used.
The molecular weight of the above acrylic series lubricant in weight average molecular weight is preferably 50, 000 or greater and 3,000,000 or less, and more preferably 100, 000 or greater and 1,000,000 or less.

In addition, liquid paraffin, paraffin wax, micro wax, polyethylene wax, polypropylene wax, natural wax, synthetic wax and the like, and mixed products thereof, can be cited as hydrocarbon series lubricants.

The content of these lubricants in the aliphatic polyester series resin contained in the fine powder-containing polyester layer is preferably 0. 05 percent inmass or greater and 10 percent inmass or less, and more preferably 0.1 percent in mass or greater and 5 percent in mass or less.

### (Metal plate)

In the following, the metal plate contained in the light-reflecting panel according to the present embodiment will be described.
According to the type of liquid crystal display device using the reflector, stainless steel plates with a thickness of 0.05mm to 0.4mm, aluminum alloys with a thickness of 0.1 to 0.6mm, brass plates with a thickness of 0.2 to 0.4mm, can be cited as metal plates used in the present embodiment; however the plates are not limited to these..

It is desirable to subject to surface treatment the surface on the side of the metal plate that is to be heat fused, to improve the adhesion/firm adhesion of the light-reflecting panel.
Chemical treatment, discharge treatment and electromagnetic wave radiation treatment can be given as surface treatments.
Treatment methods, such as, silane coupling agent treatment, acid treatment, alkaline treatment, ozone treatment and ion treatment can be given as chemical treatments.
Treatment methods, such as, corona discharge treatment, glow discharge treatment, arc discharge treatment and low temperature plasma treatment can be given, as discharge treatments.
Treatment methods, such as, ultraviolet light treatment, X-ray treatment, gamma ray treatment and laser treatment can be given as electromagnetic wave radiation treatments.
Among these, silane coupling agent treatment, having a strong effect of increasing adhesion in particular of inorganic objects (metal plate) and organic objects (fine powder-containing polyester layer), and corona discharge treatment, allowing adhesion to be increased efficiently under atmospheric pressure, are preferred.

In addition, thermally modified coat layer (hereinafter referred to as coat layer), which is a thin film comprising epoxy resin, fatty acid or hydroxy-substituted phenol heat treated in a range of 300°C to 500°C, can also be intercalated between the B layer and the metal plate. By intercalating the coat layer, the adhesive strength of the entirety of the B layer and the metal plate can be increased considerably, preventing detachment due to cohesive failure during light-reflecting material form-processing.

As epoxy resins, for instance, bisphenol type epoxy resins, and more concretely, bisphenol-type epoxy resins, such as, bisphenol A monoglycidyl ether, bisphenol A glycidyl ether can be given. In addition to these, various epoxy resins, such as, bisphenol F type and resorcyl type epoxy resins can be given.
A molecular weight on the order of 300 to 3,000, and an epoxy equivalent of 150 to 32 00 are preferred for the epoxy resin.

Generally, compounds represented by RCOOH (R represents a saturated or unsaturated hydrocarbon), which are lower fatty acids and higher fatty acids, may be included as fatty acids. Lower ones are obtained by chemical synthesis methods and those with a carbon number of 6 or above for R are obtained by hydrolysis of natural oils and fats. Concretely, fatty acids, such as, palmitic acid, stearic acid, oleic acid, lauric acid, myristic acid and behenic acid can be given, without limiting to these examples.

For instance, hydroxymethyl-substituted phenols, such as, alcohol salicylate and o-hydroxymethyl-p-cresol can be given as hydroxymethyl-substituted phenols.

The coating amount of the coat layer is different depending on the type of metal plate and the like, and the thickness of the coat layer after dry curing can be chosen to be in the range of 0.01µm to 10µm, preferably in a range of 0.02µm to 7µm. If the thickness is in the range of 0.01µm to 10µm, a sufficient adhesive strength can be obtained, and no detachment occurs when form-process the light-reflecting material.

It is adequate to pre-form the coat layer on the metal plate. Concretely, it suffices to coat the surface of the metal plate with epoxy resin, fatty acid or hydroxymethyl-substituted phenol, followed by heat treatment for thermal modification. As a method for coating the surface of the metal plate, although it differs depending on the morphology of the metal plate surface and the like, general coating methods, such as, gravure roll method, reverse roll method, kiss roll method, air knife coating method and dip coating method can be implemented by using epoxy resin, fatty acid or hydroxymethyl-substituted phenol as is, or, after diluting with an organic solvent, such as, methyl ethyl ketone, acetone, toluene or trichloroethylene.

### (Layering of A layer, B layer and metal plate)

The reflective film of the present embodiment possesses the characteristics of the respective layers simultaneously by having a B layer with a high adhesive strength intercalated between an A layer having high reflection capability and a metal plate (layering constitution: A layer/B layer/metal plate), and allows, for instance, dimensional stability under heating environment and form-processable mechanical strength to be ensured. An example of layering method comprises pre-forming an A layer and a B layer may be into films, layering these onto a metal plate and heat-fusing.

### (Thickness)

The thickness of the A layer is preferably 50µm to 250pm. The thickness of the B layer is preferably 5µm to 100µm.

The thickness of the light-reflecting material according to the present embodiment differs depending on the desired application and the metal plate used and is not limited in particular, in view of applications as light-reflecting material for small and thin type reflective panel applications, thicknesses of 0.05mm to 1mm are preferred, among which thicknesses of 0.1mm to 0.7mm are preferred.

### (Properties of the light-reflecting panel)

With respect to light with a wavelength of 550nm, the light-reflecting panel according to the present embodiment has a reflectance of preferably 95% or greater, and more preferably 97% or greater, as measured from the side for reflection use. If the reflectance is 95% or greater, satisfactory reflection properties are demonstrated, and allows sufficient brightness to be provided to screens such as of liquid crystal displays..

A thermal property of the A layer and B layer contained in the light-reflecting panel according to the present embodiment is a thermal shrinkage ratio when left for 5 minutes at 120°C of preferably 10% or less and more preferably 5% or less.
For instance, when integrating as reflective panel in car navigation systems for automobiles, in-car small televisions and the like, there is the necessity of preventing the occurrence of ripples and wrinkles even under high temperature environment, in view of the temperature inside a car under blazing sun in the summer. That is to say, heat resistance and dimensional stability under heating environment are required. Consequently, as described previously, a thermal shrinkage ratio when left for 5 minutes at 120°C of 10% or less is preferred, as dimensional stability, which maintains planarity of the A layer and the B layer, is ensured, and detachment from the metal plate also does not occur.

### (Application)

From the fact that it is provided simultaneously with a high reflection capability and a high heat resistance, as described above, the light- reflecting material according to the present embodiment not only excels as reflective panel, or the like, in displays such as for personal computers and televisions, illumination instruments, illuminated signs, it can also be used suitably as a member called reflector comprising a form-processed light-reflecting material.

### (Manufacturing method)

The light-reflecting panel according to the present embodiment can be manufactured in such a way whereby the A layer and the B layer are formed respectively into film shapes, and these are layered over the metal plate.
Hereinafter, manufacturing method of the light-reflecting material according to the present embodiment will be described; however, the methods are not limited in any way to the following manufacturing methods.

Regarding the fine powder-containing polyester layer (A layer), a polyester series resin composition combining an aliphatic polyester series resin and a fine powder filler is obtained, this is melted to form a film, and as necessary stretched to obtain film A. A detailed description is given below.

First, a resin composition A combining an aliphatic polyester series resin with a fine powder filler and as necessary other additives, such as, anti-hydrolysis agent, is made. Concretely, after a fine powder filler, an anti-hydrolysis agent, and the like, are added to an aliphatic polyester series resin and mixed with a ribbon blender, a tumbler, a Henschel mixer or the like, the resin composition A is obtained, by kneading at the temperature of the melting point of the resin or higher (for instance, 170°C to 230°C in the case of lactic acid series polymer), using a Banbury mixer, a uniaxial or biaxial extruder, or the like.
Note that the resin composition A may also be obtained by adding using separate feeders, or the like, prescribed quantities of aliphatic polyester series resin, fine powder filler, anti-hydrolysis agent, and the like. In addition, the resin composition A can be made to have a desired concentration by pre-making a so-called master batch, which combines an aliphatic polyester series resin with a fine powder filler, an anti-hydrolysis agent and the like at high concentrations, and mixing this master batch and the aliphatic polyester series resin.

Next, the resin composition A obtained in this way is melted and formed into a film. For instance, the resin composition A is dried, supplied to the extruder, heated to the temperature of the melting point of the resin or higher, and melted. In so doing, the resin composition A may be supplied to the extruder without drying; however, if not drying, the use of a vacuum vent is preferred during the melt-extrusion.
Conditions such as extrusion temperature need to be set taking into account such facts as the molecular weight decreases due to decomposition, and for instance, the extrusion temperature is preferably in a range of 170°C to 230°C when a lactic acid series polymer is used as the aliphatic polyester series resin.
The molten resin composition A is extruded from a slit-shaped discharge port of a T die, brought in firm contact with a cooling roll and solidified, forming a cast sheet (unstretched state), and a film A is obtained.

The obtained film A (cast sheet) can also be stretched 1.1 fold or more, at least in one axial direction. By stretching, gaps having fine powder filler as nuclei are formed within the film, forming interfaces between the resin and gaps, and interfaces between gaps and the fine powder filler, increasing the effect of refractive scatter arising at the interfaces, which allows the light reflectivity of the A layer to be further increased.

The stretch temperature when stretching is preferably a temperature that is within a range on the order of the glass transition temperature (Tg) of the resin to (Tg+50°C), for instance, in the case of a lactic acid series polymer, 50°C or above and 90°C or less, is preferred. If the stretch temperature is in this range, stretching can be carried out stably without rupture at stretch time, in addition, stretch orientation degree becomes high, and as a result thereof, porosity becomes greater, such that an A layer having high reflectance is obtained more readily.

More preferably, film A is biaxially stretched. By stretching biaxially, the porosity becomes even greater, allowing the light reflectivity of the A layer to be further increased.
The stretch sequence of the biaxial stretching is not limited in particular, and it does not matter whether it is, for instance, simultaneous biaxial stretching or successive stretching. After melt-fabrication of the film using a stretching equipment, stretching in the MD by roll stretching and then stretching in the TD by tenter stretching, or biaxial stretching by tubular stretching or the like, may be carried out.

The stretch scale factor when uniaxially stretching or biaxially stretching is suitably determined according to the composition of the A layer, the stretching means, the stretching temperature and the target product morphology. 5 fold or more stretching as area scale factor is preferred, and 7 fold or more stretching is more preferred. If the cast sheet is stretched so that the area scale factor becomes 5 fold or more, a porosity of 5% or greater within the A layer can be realized, by stretching to 7 fold or more, a porosity of 20% or greater can be realized, and by stretching to 7.5 fold or more, a porosity of 30% or greater can also be realized.

In addition, carrying out heat treatment is desirable, in order to confer heat resistance and dimensional stability to the obtained film A.
The heat treatment temperature of the A layer in film shape is preferably 90 to 160°C, and more preferably 110 to 140°C. The time of treatment required for the heat treatment is preferably 1 second to 5 minutes. In addition, there is no limitation regarding stretch equipments and the like, carrying out tenter stretching, which allows heat fixation treatment to be carried out after stretching, is preferred.

### (Method for layering A layer/B layer/metal plate)

Next, film A created as described previously is layered, via film B comprising the polyester series resin contained in the B layer, onto a metal plate to manufacture a light-reflecting material.
As a method for layering, a method can be given, whereby film B and film A are stacked in this order over the metal plate, and supplied in this state to the heat pressurization roll to be heat fused. In so doing, regarding the temperature for heat-fusing, performing at a temperature range of 140°C to 280°C is preferred, and a temperature range of 150°C to 210°C is more preferred, from the point of adhesive strength.
Note that it is also possible to heat so as to bring the temperature of the metal plate surface to on the order of the melting point of the resin contained in the A layer and the B layer, and heat-fusing using a rubber roll.

### [Examples]

Hereinafter, the present invention will be described more concretely by showing examples, the present invention is not limited to these, and a variety of applications are possible within a range of that does not depart from the technical ideas of the present invention. Note that the measurement and evaluations shown in the examples were carried out as shown below.

### (Measurement and evaluation methods)

(1) Firm adhesion: by a method that visually examines whether or not a detachment of film from a metal thin plate is observed when pushing out 4mm with an Erichsen cupping tester in compliance with JIS Z2247, those samples where detachment of film was not observed were assessed as open circle, those where detachment was observed to an extent that poses no issue for practical use were assessed as triangle, and those where detachment of film was observed were assessed as cross.

(2) Reflectance: an integrating sphere was set on a spectrophotometer ("U-4000" manufactured by Hitachi Co., Ltd.), reflectance with respect to light at a wavelength of 550nm was measured, those where no reflectance decrease was observed were assessed as open circle, those where a decrease was observed to an extent that poses no issue for practical use (less than -0.5%) were assessed as triangle, and those where a reflectance decrease (exceeding -0.5%) was observed were assessed as cross. Note that before the measurements, the photometer was set so that the reflectance of alumina white plate was 100%.

### [Example 1]

The front and back layers and the middle layer were respectively made from resin composition A and resin composition B, such as those describe below. That is to say, the resin composition A and the resin composition B were melted with respective extruders set to 220°C, converged with a layering tip to be co-extruded into a two-species triple-layer (A layer/B layer/A layer), and cooled with a cast roll to obtain a cast sheet with a thickness of 188µm. Next, the cast sheet was heat-fused onto a stainless steel plate (SUS304) with a thickness of 200µm heated to a surface temperature of 180°C to obtain a light-reflecting material. This light-reflecting material was evaluated for the above-mentioned firm adhesion and reflectance.

Resin composition A: a resin composition in which 22.5 parts in mass of titanium oxide with an average particle size of 0.25µm (Tipaque PF740: manufactured by Ishihara Sangyo Kaisha, Ltd.; vanadium content: 1ppm; surface treated with alumina, silica and zirconia) and 7.5 parts in mass of barium sulfate were mixed in proportion to 70 parts in mass of lactic acid series polymer having a weight average molecular weight of 200,000 (NW4032D: manufactured by Cargill Dow Polymer; L isomer: D isomer=98.5:1.5; refractive index: n=1.46).
Resin composition B: a resin composition in which the above titanium oxide was mixed with a proportion of 20 parts in mass to 80 parts in mass of the above lactic acid series polymer.

### [Example 2]

A light-reflecting material was obtained similarly to Example 1 except that one percent in mass of acrylic series polymer external lubricant (METABLEN L-1000: Mitsubishi Rayon Co., Ltd.) was included in the resin composition A of Example 1.
This light-reflecting material was evaluated for the above-mentioned firm adhesion and reflectance.

### [Comparative Example 1]

A reflection sheet with a thickness of 188µm comprising an aromatic polyester series resin as the main constituent (LUMIRROR E60L: Toray Industries) was heat-fused onto a stainless steel plate (SUS304) with a thickness of 200µm heated to a surface temperature of 270°C to obtain a light-reflecting material. This was evaluated for the above-mentioned firm adhesion and reflectance.

**[Table 1]**

| | Example 1 | Example 1 | Comparative Example 1 |
|---|---|---|---|
| Sample | 1 | 2 | 3 |
| Resin | An aliphatic polyester (lactic acid series polymer) | | Aromatic polyester |
| Lubricant | No | Yes | No |
| Firm adhesion | Δ | ○ | × |
| Reflectance before adhesion [%] | 99.1 | 99.1 | 95.3 |
| Reflectance after adhesion [%] | 99.1 | 99.1 | 95.1 |
| Judgment of Reflectance | ○ | ○ | Δ |

The results for Example 1, Example 2 and Comparative Example 1 are shown in Table 1. From these results, it became apparent that the lactic acid series polymer, which is an aliphatic polyester, had better firm adhesion and maintenance of reflectance than the aromatic polyester series resin. In addition, it became apparent that firm adhesion increased by adding an acrylic series macromolecular external lubricant to the lactic acid series polymer.

### [Example 3]

Silica was added and mixed to a lactic acid series polymer having a weight average molecular weight of 200,000 (L isomer:D isomer=98.5:1.5; ΔHm=43.9J/g), this mixture was melted with an extruder set at 220°C, extruded, and cooled with a cast roll to obtain a cast sheet having a thickness of 25µm. Next, the cast sheet was heat-fused onto a stainless steel plate (SUS304) with a thickness of 200µm heated to a surface temperature of 180°C to obtain a light-reflecting material. This light-reflecting material was evaluated for the above-mentioned firm adhesion and reflectance.

### [Example 4]

A light-reflecting material was obtained similarly to Example 3 except that instead of the lactic acid series polymer of Example 3, a lactic acid series polymer with a weight average molecular weight of 200,000 (L isomer:D isomer=92.5:7.5; ΔHm=29.7J/g) was used. This light-reflecting material was evaluated for the above-mentioned firm adhesion and reflectance.

**[Table 2]**

| | Example 3 | Example 4 |
|---|---|---|
| Sample | 4 | 5 |
| Content of D isomers [%] | 0.5 | 7.4 |
| Temperature of heat fusion | 180 | 150 |
| Firm adhesion | ○ | ○ |

The results for Example 3 and Example 4 are shown in Table 2. From these results, it became apparent that when the amount of heat of fusion is adjusted by increasing the content of D isomers in the lactic acid series polymer, the film had sufficient adhesive strength even when the temperature of heat fusion to metal plate was decreased.

The following became apparent from the results of the above examples and comparative examples.
- Compared to reflection sheets using aromatic polyester series resin, reflection sheets using aliphatic polyester series resin, allowed heat fusion with metal plate to be carried out and excelled in firm adhesion.
- Heat fusion with metal plate was easier when an acrylic series polymer external lubricant was included within the surface layer of the lactic acid series polymer, compared to a lactic acid series polymer without the inclusion.
- Layering with the metal plate was easier by increasing the content of D isomers in the lactic acid series polymer to decrease the amount of heat of fusion.
- Temperature of heat fusion of the metal plate and the lactic acid series polymer was preferably 140°C to 280°C.

### [Test 1]

a resin composition in which 22.5 parts in mass of titanium oxide with an average particle size of 0.25µm (Tipaque PF740: manufactured by Ishihara Sangyo Kaisha, Ltd.; vanadium content: 1ppm; surface treated with alumina, silica and zirconia) and 7.5 parts in mass of barium sulfate were mixed in proportion to 70 parts in mass of lactic acid series polymer having a weight average molecular weight of 200,000 (NW4032D: manufactured by Cargill Dow Polymer; L isomer:D isomer=98.5:1.5; refractive index: n=1.46), was melted with an extruder set at 220°C, extruded, and cooled with a cast roll to obtain a cast sheet having a thickness of 188µm. Next, a film with a thickness of 15µm comprising a terephthalic acid-iso phthalic acid polyester co-polymer (co-polymerized PET) was intercalated between the cast sheet and a stainless steel plate (thickness: 100µm; SUS304), heat fused at a variety of surface temperatures such as those shown in Table 1, to obtain a light-reflecting material with a thickness of approximately 0.3mm. This light-reflecting material was evaluated for the above-mentioned firm adhesion and reflectance. The heat fusion temperatures of Test 1 and the evaluation results are shown in Table 3.

**[Table 3]**

| Sample | 6 | 7 | 8 | 9 | 10 | 11 |
|---|---|---|---|---|---|---|
| Resin on Adhesive layer | Polyester series resin (co-polymerized PET) | | | | | |
| Heat fusion temperatures [°C] temperatures [°C] | 160 | 170 | 180 | 190 | 200 | 210 |
| Firm adhesion | ○ | ○ | ○ | ○ | ○ | Δ |
| Reflectance before adhesion [%] | 99.1 | | | | | |
| Reflectance after adhesion [%] | 99.1 | 99.1 | 99.1 | 99.1 | 99.1 | 98.9 |
| Judgment of Reflectance | ○ | ○ | ○ | ○ | ○ | Δ |

From these results, it became apparent that, when the heat fusion temperature was increased, although there was no issue in terms of practical use, adhesive strength and reflectance tended to decrease.

### [Test 2]

A light-reflecting material was obtained similarly to Example 1 except that instead of the terephthalic acid-iso phthalic acid polyester co-polymer of Test 1, a variety of polyester series resins, or a variety of polyolefin series resins were used for the adhesive layer, and this light-reflecting material was evaluated for firm adhesion. Note that the heat fusion temperature was set to a temperature appropriate for the resin used in the adhesive layer. The heat fusion temperatures of Test 2, and the evaluation results are shown in Table 4.

The polyester series resin and polyolefin series resin used as the adhesive layer were as follows. The abbreviations are given along in alphabet.

### (Polyester series resin)

Sample12: terephthalic acid-iso phthalic acid co-polymer polyester (Co-polymer PET)
Sample13: lactic acid series polymer (PLA)
Sample14: low crystallinity lactic acid series polymer (A-PLA)
Sample15: polybutylene terephthalate (PBT)

### (Polyolefin series resin)

Sample16: ethylene-vinyl acetate co-polymer (EVA)
Sample17: polypropylene (PP)
Sample18: polyether sulfone (PES)

**[Table 4]**

| | Polyester series resin | | | | Polyolefin series resin | | |
|---|---|---|---|---|---|---|---|
| Sample | 12 | 13 | 14 | 15 | 16 | 17 | 18 |
| Resin on Adhesive layer | Co-polymerized PET | PLA | A-PLA | PBT | EVA | PP | PES |
| Melting point of Resin on Adhesive layer [°C] | 160 | 170 | - | 230 | 80 | 165 | 200 |
| Firm adhesion | ○ | ○ | ○ | Δ | × | × | × |

From this result, it became apparent that polyolefin was inadequate and polyester was preferable, as resin to be used in the adhesive layer of the A layer.

Taking the above results from examples and comparative examples, it became apparent that lactic acid series polymers, and polyester series resins and co-polymer polyester series resins having a melting point in the range of 80°C to 270°C were preferable as the polyester resin of the B layer

## Claims

1. A light-reflecting panel, comprising a constitution wherein a fine powder-containing polyester layer (A layer) containing an aliphatic polyester series resin and a fine powder filler is provided on one face or on both faces of a metal plate.

2. The light-reflecting panel as recited in Claim 1, provided with a constitution wherein a fine powder-containing polyester layer (A layer) comprising an aliphatic polyester series resin and a fine powder filler is directly layered over one face or both faces of a metal plate.

3. The light-reflecting material as recited in Claim 2, wherein said fine powder-containing polyester layer (A layer) is a layer that has a constitution with two or more layers, the amount of heat of fusion of said aliphatic polyester series resin to be layered over said metal plate being less than the amount of heat of fusion of an aliphatic polyester series resin of an adjacent layer.

4. The light-reflecting material as recited in Claim 2 or 3, wherein said fine powder-containing polyester layer (A layer) is a layer having a constitution comprising one layer or more, and said layer to be layered over said metal plate contains a lubricant.

5. The light-reflecting panel as recited in any among Claims 2 to 4, wherein any one surface treatment chosen from the group of chemical treatment, discharge treatment, and electromagnetic wave radiation treatment is performed on at least one face of said fine powder-containing polyester layer (A layer), or the face on the side of said metal plate where said fine powder-containing polyester layer is to be heat-fused.

6. The light-reflecting panel as recited in Claim 1, provided with a constitution wherein said fine powder-containing polyester layer (A layer) comprising an aliphatic polyester series resin and fine powder filler is layered on one face or both faces of said metal plate, via a polyester resin adhesive layer (B layer) comprising a polyester resin.

7. The light-reflecting material as recited in Claim 6, wherein said polyester resin adhesive layer (B layer) contains a polyester series resin having a melting point of 80°C to 270°C.

8. The light-reflecting material as recited in Claim 6 or 7, wherein said polyester res in adhesive layer (B layer) contains a lactic acid series polymer.

9. The light-reflecting material as recited in any among Claims 6 to 8, wherein said polyester resin adhesive layer (B layer) is a layer containing a lactic acid series polymer, the amount of heat of fusion of said lactic acid series polymer contained in said B layer being less than the amount of heat of fusion of said aliphatic polyester series resin contained in said A layer.

10. The light-reflecting material as recited in any among Claims 6 to 9, wherein said polyester resin adhesive layer (B layer) contains a layer comprising a co-polymer polyester series resin wherein the repeating unit of the ester consisting of one or more species of acid constituents and one or more species of multivalent alcohol constituents.

11. The light-reflecting material as recited in any among Claim 6 to 10, provided with a constitution wherein a thermally modified coat layer, which is a thin film comprising epoxy resin, fatty acid or hydroxy substituted phenol heat treated in a range of 300°C to 500°C, is intercalated between said polyester resin adhesive layer (B layer) and said metal plate.

12. The light-reflecting material as recited in any from Claims 6 to 11, wherein said polyester resin adhesive layer (B layer) contains a fine powder filler.

13. The light-reflecting material as recited in any from Claims 1 to 12, wherein the refractive index of said aliphatic polyester series resin within said fine powder-containing polyester layer (A layer) is less than 1.52.

14. The light-reflecting material as recited in any from Claims 1 to 13, wherein the melting point of said aliphatic polyester series resin within said fine powder-containing polyester layer (A layer) is from 150°C to 230°C.

15. The light-reflecting material as recited in any among Claims 1 to 14, wherein said aliphatic polyester series resin within said fine powder-containing polyester layer (A layer) is a lactic acid series polymer.

16. The light-reflecting material as recited in any from Claims 1 to 15, wherein 10 percent in mass to 60 percent in mass of said fine powder filler within said powder-containing polyester layer (A layer) is contained, with respect to the mass of the entirety of the fine powder-containing polyester layer.

17. The light-reflecting material as recited in any from Claims 1 to 16, wherein said fine powder filler within said fine powder-containing polyester layer (A layer) is titanium oxide.

18. The light-reflecting material as recited in any among Claims 1 to 17, wherein said fine powder filler within said fine powder-containing polyester layer (A layer) is titanium oxide with a vanadium content of 5ppm or less.

19. The light-reflecting material as recited in Claim 17 or 18, wherein said fine powder filler within said fine powder-containing polyester layer (A layer) is titanium oxide, the surface thereof being enveloped by at least one species of inert inorganic oxide chosen from the group of silica, alumina, and zirconia.

20. A backlighting apparatus for liquid crystal display device using the light-reflecting panel as recited in any of Claims 1 to 19.

21. A method for manufacturing a light-reflecting panel, wherein manufacturing is by heat-fusing a fine powder-containing polyester film comprising an aliphatic polyester series resin and a fine powder filler, and a metal plate.

22. The method for manufacturing a light-reflecting panel as recited in Claim 21, wherein the temperature for the heat fusion of said fine powder-containing polyester film and said metal plate is from 140°C to 280°C.

23. A method for manufacturing a light-reflecting material, wherein a film A comprising an aliphatic polyester series resin and a fine powder filler is heat-fused and layered over one face or both faces of a metal plate, via a film B comprising a polyester resin.

24. The method for manufacturing a light-reflecting material as recited in Claim 23, wherein the temperature of said heat fusion is from 140°C to 280°C.
